Europäisches Patentamt

(19) European Patent Office

Office européen des brevets

(11) Numéro de publication: **0 181 792**
**A1**

## (12) DEMANDE DE BREVET EUROPEEN

(21) Numéro de dépôt: 85401939.5

(22) Date de dépôt: 04.10.85

(51) Int. Cl.⁴: **B 65 G 47/14**

(30) Priorité: 12.10.84 FR 8415670

(43) Date de publication de la demande:
21.05.86 Bulletin 86/21

(84) Etats contractants désignés:
BE CH DE GB IT LI NL

(71) Demandeur: LES APPLICATIONS DE LA VIBRATION
(A.D.V.) Société Anonyme
Zone Industrielle du Bac d'Ablon 26 rue Mercure
F-91230 Montgeron(FR)

(72) Inventeur: Lebreuil, Jean-Claude Gaston Clément
24, rue Paul Bert
F-94000 Villeneuve Le Roi(FR)

(74) Mandataire: Vander-Heym, Roger
172 Boulevard Voltaire
F-75011 Paris(FR)

(54) Procédé pour distribuer des coupelles et moyens de mise en oeuvre.

(57) Procédé pour distribuer des coupelles, du genre de ceux utilisant un tapis élévateur (2), sans fin, pourvu de tasseaux (1) et présentant une partie sensiblement horizontale et une partie fortement inclinée, consistant à déverser sur la partie horizontale du tapis un nombre de coupelles (A) sensiblement égal à celui que les tasseaux (1) peuvent entraîner dans le même temps.

Moyen de mise en oeuvre du procédé ci-dessus consistant à stocker les coupelles dans une trémie (3) présentant à sa partie inférieure un orifice (4), disposé au-dessus de la partie horizontale du tapis élévateur, par lequel les coupelles sortent entraînées par un tapis d'alimentation (5), sans fin, formant le fond mobile de ladite trémie (3).

EP 0 181 792 A1

./...

La présente invention est relative à un procédé pour distribuer des coupelles du genre de celles se présentant sous la forme d'une enveloppe cylindrique pourvue d'un fond à une extrémité.

En l'état actuel de la technique on utilise un tapis élévateur sans fin, pourvu de tasseaux horizontaux, plongeant dans une cuve contenant des coupelles en vrac, la partie inférieure dudit tapis s'incurvant pour constituer le fond mobile de ladite cuve.

Les coupelles tombent sur le tapis, entre les tasseaux, et sont entraînées par celui-ci si elles reposent sur ce dernier par une de leurs extrémités.

Lorsque la position considérée du tapis passe d'une position sensiblement horizontale à une position voisine de la verticale, les rares coupelles dont le fond n'est pas en contact avec ledit tapis retombent dans la cuve. Ce résultat est obtenu par le fait que la hauteur des tasseaux est inférieure à celle des coupelles et qu'elle est judicieusement déterminée de façon à ce que la verticale passant par le centre de gravité de la coupelle ne rencontre pas le tasseau correspondant si son fond n'est pas en contact avec le tapis.

Comme chaque tasseau peut entraîner plusieurs coupelles, celles-ci sont balayées à la partie supérieure du tapis par une règle oblique et sont dirigées latéralement vers un réservoir raccordé à la conduite d'évacuation usuelle selon une technique connue.

Ce dispositif, dans lequel le tapis "barbote " dans la cuve d'alimentation, donne de bons résultats pour de petites coupelles dont le diamètre est de l'ordre de vingt à trente millimètres telles que les capsules utilisées pour obturer les bouteilles.

Par analogie on a essayé d'utiliser ce dispositif pour distribuer des coupelles présentant des diamètres de l'ordre de quatre vingts à cent millimètres pour une épaisseur de paroi inférieure à un millimètre environ.

On a constaté alors qu'aucune coupelle ne reposait sur les tasseaux à la sortie de la cuve.

Ce phénomène trouve son explication dans le fait que compte tenu du volume qu'elles occupent de telles coupelles présentent une faible densité par rapport aux petites coupelles habituellement distribuées. De ce fait, leur inertie est faible et le moindre choc suffit pour les déplacer.

Comme la cuve est pleine de coupelles, celles qui sont entraînées par les tasseaux heurtent, durant leur trajectoire à travers la cuve, les autres coupelles et s'échappent desdits tasseaux. Pour réduire l'importance des chocs on pourrait diminuer la vitesse linéaire du tapis, mais ce procédé ne serait pas satisfaisant car alors on réduirait d'autant la cadence. Certes, pour rétablir la cadence, il serait concevable d'augmenter la largeur du tapis mais alors on augmenterait considérablement le volume de l'appareil et surtout son prix de revient.

Il en ressort que, pour une cadence imposée, la vitesse du tapis et sa largeur sont donc des grandeurs sur lesquelles on ne peut pas intervenir de façon notable.

Le procédé de l'invention qui remédie à ces inconvénients consiste à ne déverser sur la partie horizontale du tapis qu'un nombre de coupelles sensiblement égal à celui que le tapis peut entraîner dans le même temps.

De cette façon, le nombre de coupelles libres qui se trouvent agitées par le tapis dans la zone proche de son changement de pente est pratiquement nul. Si un choc se produit entre une coupelle entraînée et une coupelle libre il est très faible puisque rien, ou presque, ne s'oppose au déplacement de la coupelle libre tandis que celle entraînée reste sur le tapis.

Un moyen de mise en oeuvre de ce procédé consiste à disposer au-dessus de la partie horizontale du tapis élévateur une trémie pourvue d'une ouverture à sa partie inférieure vers laquelle les coupelles sont dirigées par l'entremise d'un tapis d'alimentation sans fin formant le fond de ladite trémie.

Dès lors, on comprend qu'en réglant la vitesse du tapis d'alimentation précité il est possible de contrôler très simplement le nombre de coupelles qui sont déversées sur le tapis élévateur.

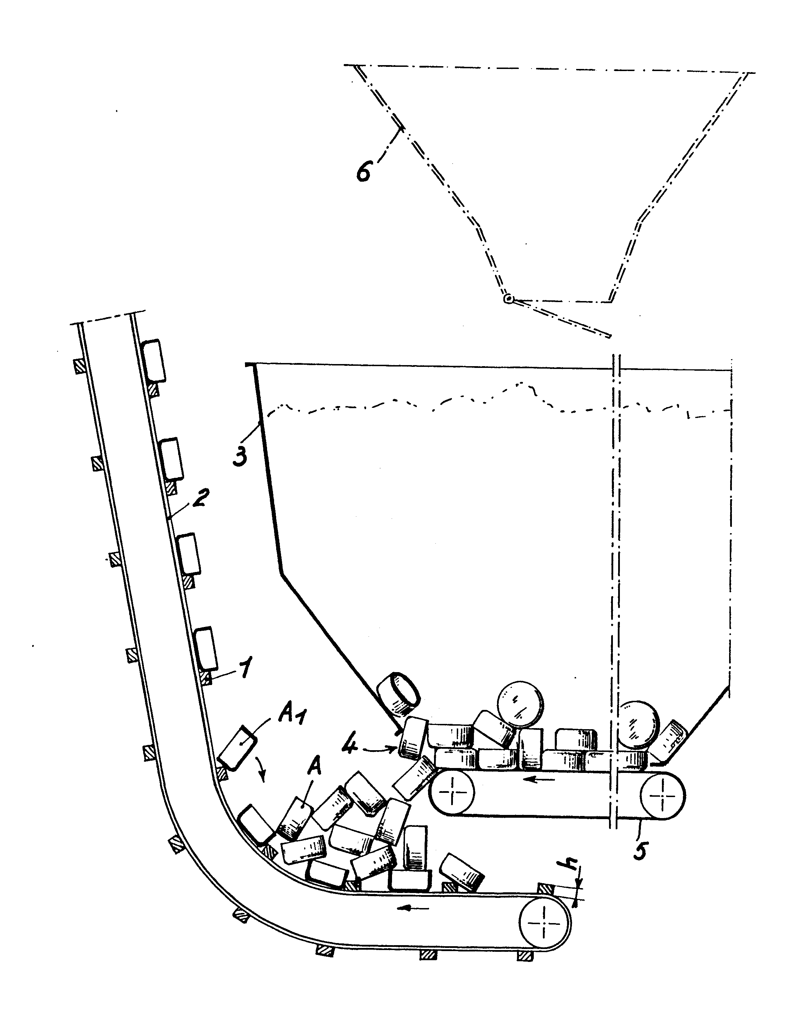

L'invention sera mieux comprise par la description qui va suivre faite en se référant à la figure unique du dessin annexé à titre d'exemple indicatif seulement.

- 3 -

0181792

Le problème consiste à déposer avec la même orientation des coupelles A constituées par une enveloppe cylindrique pourvue d'un fond à une extrémité, étant entendu que ces coupelles ont un diamètre de l'ordre de quatre vingts à cent millimètres et que l'épaisseur de leur paroi est de l'ordre d'un millimètre. En d'autres termes, il s'agit de coupelles qui,compte tenu du volume qu'elles occupent présentent une faible densité.

De la façon connue, les coupelles sont entraînées par les tasseaux 1 d'un tapis sans fin 2 élévateur comportant à sa partie inférieure une partie s'étendant sensiblement horizontalement se prolongeant par une autre partie fortement inclinée.

La hauteur $h$ des tasseaux 1 est telle que lorsque le fond de la coupelle ne repose pas contre le tapis, celle-ci bascule et tombe par gravité.C'est le cas de la coupelle Al.

A la partie supérieure,non représentée,du tapis 2 les coupelles sont évacuées de la façon connue vers une canalisation d'amenée à la machine d'utilisation.

Selon le procédé de l'invention, on déverse sur la partie horizontale du tapis un nombre de coupelles sensiblement égal à celui qu'il peut entraîner.

Compte tenu du débit désiré, il est très facile de déterminer le nombre de coupelles à déverser par unité de temps. On sait, par expérience, que la plupart des coupelles tombent sur le tapis en reposant par leur fond et que le nombre de celles qui entraînées par les tasseaux vont basculer lors du changement de pente est très faible de sorte que les coupelles qui retombent sont en nombre insuffisant pour créer dans la zone du tapis proche de son coude une accumulation de pièces susceptibles d'augmenter de façon intempestive la densité de pièces dans cette zone.

Selon un mode de mise en oeuvre de l'invention, les coupelles à distribuer sont placées dans une trémie 3 présentant à sa partie inférieure un orifice 4 par lequel elles sortent de la trémie sous l'action d'un tapis d'alimentation sans fin 5, horizontal, formant le fond mobile de ladite trémie.

Il apparaît donc qu'il est très facile, en réglant judicieusement la vitesse du tapis d'alimentation 5,de ne déverser sur le tapis 2 que la quantité de coupelles désirée.

L'expérience a montré cependant que le débit de la trémie 3 n'était pas uniquement fonction de la vitesse du tapis 5 mais dépendait du degré de remplissage de ladite trémie, le débit augmentant au fur et à mesure de la vidange de cette dernière.

Un premier moyen pour remédier à cet inconvénient consiste à entraîner le tapis 5 à une vitesse telle que lorsque la trémie est presque vide le débit de cette dernière soit sensiblement égal à celui du tapis 2.

Cette solution qui a le mérite d'être très simple nécessite de trop grandes dimensions du distributeur notamment de son organe de stockage, si on ne veut pas que son débit baisse lorsque la trémie est pleine.

Un second moyen consiste à contrôler la vitesse du tapis d'alimentation en fonction du nombre de coupelles libres dans la zone proche du coude du tapis 2 ou en fonction du degré de remplissage de la trémie.

Dans l'un et l'autre cas, on utilise une technique bien connue faisant appel à des cellules photo-électriques.

Enfin, un troisième moyen consiste à maintenir un niveau constant dans la trémie, ce qui évite d'utiliser un tapis 5 à vitesse variable.

A cet effet, on stocke les coupelles dans une grande trémie 6 disposée au-dessus de celle 3 dont l'ouverture est commandée par un dispositif de contrôle du niveau des pièces dans la trémie 3. Dans ces conditions, la capacité de stockage de la trémie 3 peut être considérablement réduite puisqu'on se contente de ne maintenir dans cette dernière qu'une faible quantité de coupelles afin que la masse de ces dernières n'influence pas le débit qui est alors uniquement fonction de la vitesse du tapis 5.

Bien entendu la présente invention ne se limite pas au mode de réalisation décrit et représenté mais s'étend, au contraire, à toutes variantes de formes et dimensions.

**0181792**

REVENDICATIONS

1-Procédé pour distribuer des coupelles, du genre de ceux utilisant un tapis élévateur (2) sans fin pourvu de tasseaux (1) et présentant une partie sensiblement horizontale et une partie fortement inclinée, consistant à déverser sur la partie horizontale du tapis un nombre de coupelles (A) sensiblement égal à celui que les tasseaux (1) peuvent entraîner dans le même temps.

2-Moyen de mise en oeuvre du procédé de la revendication 1 consistant à stocker les coupelles dans une trémie (3) présentant, à sa partie inférieure, un orifice (4), disposé au-dessus de la partie horizontale du tapis élévateur par lequel les coupelles sortent entraînées par un tapis d'alimentation (5), sans fin, formant le fond mobile de ladite trémie (3),caractérisé en ce que la vitesse du tapis d'alimentation est telle que lorsque la trémie (3) est presque vide, le débit des pièces déversées sur le tapis (2) est sensiblement égal à celui que les tasseaux (1) peuvent entraîner.

3-Moyen de mise en oeuvre selon la revendication 2, caractérisé en ce que la vitesse du tapis d'alimentation est fonction du degré de remplissage de la trémie.

4-Moyen de mise en oeuvre du procédé de la revendication 1, comportant une trémie d'alimentation (3) dont le fond est constitué par un tapis d'alimentation (5) sans fin déversant les coupelles sur la partie horizontale du tapis élévateur (2), caractérisé en ce que la vitesse du tapis d'alimentation (5) est fonction du nombre de coupelles libres au voisinage du coude du tapis (2).

5-Moyen de mise en oeuvre du procédé de la revendication 1 comportant une trémie d'alimentation (3) dont le fond est constitué par un tapis (5) sans fin déversant les coupelles sur la partie horizontale du tapis élévateur (2),caractérisé en ce que des moyens sont prévus pour maintenir constant le niveau des pièces dans la trémie (3).

6-Moyen de mise en oeuvre selon la revendication 5,caractérisé en ce que les coupelles sont groupées dans une grande trémie (6) disposée au-dessus de la trémie d'alimentation (3) dont l'ouverture est commandée par un dispositif de contrôle du niveau des pièces dans la trémie d'alimentation.

Office européen
des brevets

**RAPPORT DE RECHERCHE EUROPEENNE**

0181792
Numéro de la demande

EP 85 40 1939

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| | | | B 65 G 47/14 |
| Y | US-A-3 835 985 (JOHNSON) <br> * Figures 1-3 * <br><br> --- | 1,5 | |
| Y | FR-A-1 452 872 (ETIMO) <br> * Page 2, colonne 1, lignes 9-57; figure 1 * <br><br> ----- | 1,5 | |

| DOMAINES TECHNIQUES RECHERCHES (Int Cl 4) |
|---|
| B 65 G <br> B 65 H |

Le présent rapport de recherche a été établi pour toutes les revendications

| Lieu de la recherche | Date d'achèvement de la recherche | Examinateur |
|---|---|---|
| LA HAYE | 22-01-1986 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82